(19) **Europäisches Patentamt / European Patent Office / Office européen des brevets**

(11) **EP 1 497 680 B1**

(12) **FASCICULE DE BREVET EUROPEEN**

(45) Date de publication et mention
de la délivrance du brevet:
**09.05.2007 Bulletin 2007/19**

(21) Numéro de dépôt: **03740597.4**

(22) Date de dépôt: **11.04.2003**

(51) Int Cl.:
*G02B 5/30* (2006.01)   *G02B 27/01* (2006.01)

(86) Numéro de dépôt international:
**PCT/FR2003/001161**

(87) Numéro de publication internationale:
**WO 2003/087897 (23.10.2003 Gazette 2003/43)**

(54) **SEPARATEUR DE POLARISATION EN COUCHE MINCE, PROCEDE POUR SA FABRICATION ET LENTILLE OPHTALMIQUE PRESENTANT DES INSERTS DE PROJECTION LE CONTENANT**

DÜNNSCHICHTPOLARISATIONSTEILER, VERFAHREN ZUR HERSTELLUNG DESSELBEN UND OPHTALMISCHE LINSE MIT DIESEM TEIL ALS PROJEKTIONSEINSATZ

THIN LAYER POLARISATION SPLITTER, METHOD FOR THE PRODUCTION THEREOF, AND OPHTHALMIC LENS COMPRISING PROJECTION INSERTS CONTAINING THE SAME

(84) Etats contractants désignés:
**AT BE BG CH CY CZ DE DK EE ES FI FR GB GR HU IE IT LI LU MC NL PT RO SE SI SK TR**

(30) Priorité: **16.04.2002 FR 0204727**

(43) Date de publication de la demande:
**19.01.2005 Bulletin 2005/03**

(73) Titulaire: **Essilor International
94227 Charenton le Pont (FR)**

(72) Inventeurs:
• **CADO, Hervé
F-94500 Champigny sur Marne (FR)**

• **ARROUY, Frédéric
F-55100 Verdun (FR)**
• **HELMSTETTER, Yvon
F-55500 Boviolles (FR)**

(74) Mandataire: **Hirsch & Associés
58, avenue Marceau
75008 Paris (FR)**

(56) Documents cités:
**US-A- 4 689 387      US-A- 4 723 315
US-A- 4 775 733      US-A- 5 984 477
US-A- 6 075 651      US-B1- 6 313 577**

EP 1 497 680 B1

**Description**

La présente invention concerne un séparateur de polarisation. L'invention concerne également un procédé de fabrication d'un tel séparateur de polarisation. Elle concerne aussi des lentilles ophtalmiques présentant des inserts de projection d'une image vers l'utilisateur comportant un tel séparateur de polarisation. L'invention concerne enfin des dispositifs de projection d'une image vers l'utilisateur comprenant de telles lentilles ophtalmiques.

Les séparateurs de polarisation sont des éléments optiques qui permettent de décomposer la lumière en ses composantes de polarisation différentes. La direction de polarisation de la lumière est définie par rapport au plan d'oscillation du champ électrique. Le plus souvent, la lumière non polarisée est décomposée en ses deux polarisations linéaires orthogonales. On distingue alors la polarisation S (perpendiculaire) et la polarisation P (parallèle). Dans la lumière polarisée S, le plan d'oscillation est perpendiculaire au plan d'incidence défini par la normale de la surface et le vecteur d'incidence. Dans la lumière de polarisation P, le plan d'oscillation est parallèle au plan d'incidence. La séparation des composantes peut être réalisée par absorption ou par réflexion.

La séparation de polarisation par réflexion est basée sur le principe de la transmission totale de la polarisation S. En effet, on sait qu'un rayon frappant un dioptre à un angle appelé angle de Brewster est décomposé en un rayon réfléchi totalement polarisé et un rayon réfracté partiellement polarisé de polarisation orthogonale. Le rayon réfléchi et le rayon transmis forment entre eux un angle droit.

L'angle de Brewster dépend de l'indice de réfraction des deux milieux formant le dioptre. Les indices de réfraction étant variables avec la longueur d'onde, l'angle de Brewster est également fonction de la longueur d'onde de la lumière. Ainsi, l'angle d'incidence d'un rayon ne pourra correspondre à l'angle de Brewster que pour une certaine longueur d'onde seulement. Par conséquent, un tel polariseur n'est pleinement efficace que pour une longueur d'onde donnée seulement et ne permet pas la séparation de polarisation satisfaisante sur l'ensemble du spectre, notamment du spectre visible.

Le séparateur de polarisation décrit dans US 5,400,179 présente un taux de séparation sensiblement constant pour des longueurs d'ondes supérieures à 720 nm, c'est-à-dire dans le proche infrarouge. Il est constitué d'un empilement de couches de matériaux dont l'oxyde de praséodymium $Pr_6O_{11}$, ayant un indice de réfraction situé dans trois plages différentes.

Par ailleurs, on connaît des empilements de couches minces de matériaux de différents indices de réfraction sur un substrat comme revêtements anti-reflets.

Ainsi, le document US 6,313,577 décrit un revêtement anti-reflets comportant des couches de titanate de praséodymium. Toutefois, cet empilement n'est pas adapté pour servir de séparateur de polarisation car le nombre de couches et les épaisseurs sont inadaptés. Ce traitement anti-reflets est optimisé pour une incidence normale, contrairement à un traitement de séparation de polarisation par réflexion, qui ne fonctionne qu'en incidence oblique.

Les types de séparateurs connus se révèlent cependant peu adaptés aux applications telles que les lentilles ophtalmiques présentant des inserts de projection d'une image vers l'utilisateur.

On entend ici par lentilles ophtalmiques des systèmes de combinaison d'images pour lunettes ou masques; une image est projetée vers l'oeil du porteur par un chemin optique ménagé dans la lentille; on appelle alors "lentille" le système optique contenant les inserts, qui peut notamment être destiné à être monté dans une monture de lunettes ou dans un masque. Les inserts peuvent comprendre des miroirs, des lames semi-réfléchissantes, des cubes séparateurs de polarisation, des lames quart d'onde, des lentilles, des miroirs, des lentilles réfléchissantes concaves (un miroir de Mangin, par exemple) des lentilles diffractives et/ou des composants holographiques. Un dispositif de projection d'images vers l'utilisateur comprend alors la lentille montée dans des lunettes ou masques et une source d'images telle qu'un afficheur à cristaux liquides, plus particulièrement un micro-display.

Dans de telles applications, les éléments séparateurs de polarisation servent au traitement de la lumière polarisée émise par les afficheurs actuellement utilisés tels que les microdisplays. L'efficacité du séparateur de polarisation déterminera le contraste et la perte d'intensité et donc la luminosité de l'image et constitue donc un facteur primordial.

Le choix de certains polymères comme substrat de la lentille ophtalmique impose une contrainte supplémentaire au cahier des charges. En effet, certains polymères doivent subir un traitement thermique à des températures supérieures à 100°C. Après ce type de traitement, on constate souvent l'apparition de craquelures aux interfaces de l'empilement.

L'invention propose alors un séparateur de polarisation qui surmonte les inconvénients de l'art antérieur exposés et notamment résiste à des températures entre 100 et 150°C.

L'invention est basée en particulier sur la découverte que l'utilisation de titanate de praséodymium permet d'obtenir des séparateurs de polarisation ayant une résistance accrue vis-à-vis de la température.

L'invention fournit donc un séparateur de polarisation pour lentille ophtalmique comprenant un substrat pourvu d'un empilement alterné de couches de $PrTiO_3$ et d'un matériau à indice de réfraction inférieur, l'épaisseur de ces couches $e_1$ et $e_2$ satisfaisant respectivement les relations :

$$e_1 = \frac{\lambda\sqrt{n_1^2 + n_2^2}}{4n_1^2} \qquad\qquad e_2 = \frac{\lambda\sqrt{n_1^2 + n_2^2}}{4n_2^2}$$

dans lesquelles $\lambda$ est la longueur d'onde considérée, $n_1$ est l'indice de réfraction de la première couche et $n_2$ l'indice de réfraction de la deuxième couche respectivement.

Selon un mode de réalisation, le substrat est organique.

Selon un mode de réalisation, le substrat organique est un polythiouréthane.

Selon un mode de réalisation, le deuxième matériau est le dioxyde de silicium.

Selon un mode de réalisation, le séparateur comporte respectivement au moins 6 couches de titanate de praséodymium et du deuxième matériau.

Selon un mode de réalisation, le séparateur est réalisé sous forme de cube formé de deux prismes dont un est revêtu de couches de $PrTiO_3$ et de matériau à bas indice.

L'invention a aussi pour objet un procédé de fabrication pour lentille ophtalmique d'un séparateur de polarisation comprenant les étapes suivantes :

(i) fourniture d'un substrat;
(ii) dépôt d'une couche de titanate de praséodymium d'une épaisseur $e_1$ telle que définie à la revendication 1 ;
(iii) dépôt d'une couche d'un deuxième matériau d'un indice de réfraction inférieur d'une épaisseur $e_2$ telle qu définie à la revendication 1 ; et
(iv) répétition des étapes (ii) et (iii) au moins une fois.

Selon un mode de réalisation, l'étape iv) comprend au moins 5 répétitions des étapes ii) et iii).

Selon un mode de réalisation, le substrat est maintenu pendant les étapes ii) à iv) à une température supérieure à l'ambiante.

Selon un mode de réalisation, le substrat est maintenu pendant les étapes ii) à iv) à une température comprise entre 80 et 120°C.

Selon un mode de réalisation, le substrat est soumis à un nettoyage ionique préalablement à l'étape ii).

Selon un mode de réalisation, le nettoyage ionique est réalisé à l'argon.

Selon un mode de réalisation, la vitesse d'évaporation pendant l'étape ii) et iii) est de 1 à 10 nm/s ; de préférence 2 à 5 nm/s.

L'invention a encore pour objet une lentille ophtalmique présentant des inserts de projection d'une image vers l'utilisateur comprenant un séparateur de polarisation selon l'invention.

Selon un mode de réalisation, le séparateur de polarisation est réalisé sous forme de cube.

L'invention a encore pour objet un dispositif de projection d'une image vers l'utilisateur comprenant une lentille selon l'invention.

Selon un mode de réalisation, le dispositif de projection comprend en outre un micro-display à cristaux liquides.

L'invention sera décrite plus en détail à l'aide des figures en annexe, lesquelles montrent :

Fig. 1 une représentation schématique d'un séparateur de polarisation selon un mode de réalisation de l'invention ;
Fig. 2 la transmittance de la lumière polarisée P et S respectivement en fonction de la longueur d'onde d'un séparateur de polarisation selon l'exemple 1 ; et
Fig.3 une représentation schématique d'une lentille ophtalmique présentant des - inserts de projection d'une image vers l'utilisateur selon un mode de réalisation de l'invention.

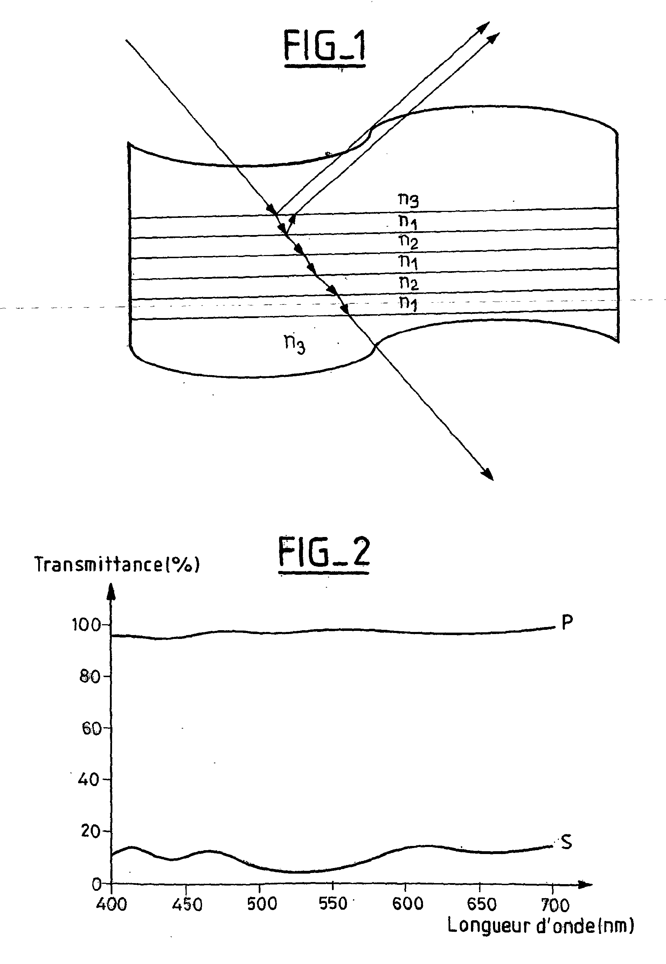

Un mode de réalisation d'un séparateur de polarisation selon l'invention est représenté schématiquement à la figure 1.

Le séparateur comprend alors sur un substrat d'indice $n_3$ un empilement de couches alternées de deux matériaux d'indice $n_1$ et $n_2$ respectivement. Le matériau d'indice $n_1$ peut être le matériau à haut indice, à savoir $PrTiO_3$, ou le matériau à bas indice ; en effet, le séparateur de polarisation fonctionne aussi bien dans les deux cas.

A chaque longueur d'onde $\lambda$ correspond un couple de couches dont les épaisseurs e1 et e2 des constituants d'indice $n_1$ et $n_2$ respectivement sont calculées comme suit :

$$e_1 = \frac{\lambda\sqrt{n_1^2 + n_2^2}}{4n_1^2} \qquad\qquad e_2 = \frac{\lambda\sqrt{n_1^2 + n_2^2}}{4n_2^2}$$

Pour être efficace dans une large plage de longueur d'onde, on découpe le spectre en différentes longueurs d'onde λ.

Le $PrTiO_3$ est utilisé comme matériau à haut indice. De préférence, le matériau est déposé sur le substrat en partant d'un composé non stoechiométrique [disponible chez Merck sous le nom de Substance H2] lequel est déposé par dépôt sous vide en présence d'oxygène. Le composé se trouve alors sous la forme oxydée et forme un film transparent qui correspond à la formule $PrTiO_3$.

L'indice du $PrTiO_3$ est de 2,00095 à 635 nm (longueur d'onde de référence). Le deuxième matériau a donc un indice inférieur à celui-ci. Parmi ces matériaux, on peut citer notamment le $SiO_2$ et le $MgF_2$, le $SiO_2$, dont l'indice de réfraction est de 1,4786 à 635 nm s'étant révélé particulièrement adapté.

Le substrat peut être tout substrat transparent compatible avec le $PrTiO_3$ et le matériau à bas indice et notamment il peut s'agir de substrats minéraux ou organiques, les substrats organiques étant toutefois préférés, étant entendu que son indice n3 est compris entre les indices $n_1$ et $n_2$.

On entend par le terme « substrat minéral » un substrat en verre minéral, en contraste avec la notion de « substrat organique » formé d'un polymère. Les substrats organiques posent des problèmes particuliers d'une part en raison de leur faible résistance à la température, d'autre part du fait que les couches minces adhèrent mal au substrat.

Les substrats organiques présentent en outre un coefficient de dilatation thermique plus élevé que les substrats minéraux. A titre d'exemple, alors que la dilatation typique d'un substrat minéral est de l'ordre de $7 \cdot 10^{-6} °C^{-1}$, celle du polycarbonate est de $70 \cdot 10^{-6} °C^{-1}$ et celle du MR8 (dont la composition est définie ci-après) est de $75 \cdot 10^{-6} °C^{-1}$, soit dix fois plus.

Il est possible que cette forte dilatation thermique soit la raison pour laquelle on observe fréquemment des craquelures sur la surface des séparateurs de polarisation de type multicouches sur substrat organique. Ces craquelures sont tout particulièrement gênantes dans des applications de vision.

Des matériaux appropriés comme substrats organiques sont par exemple les polymères de la classe des polythiouréthanes, obtenus à partir d'un polythiol et un polyisocyanate. De tels matériaux ainsi que leur procédé d'obtention sont décrits par exemple dans les brevets US 4,689,387 et US 4,775,733.

Des polythiols appropriés peuvent être par exemple le pentaerythrol tetrakis (thioglycolate), le pentaerythrol tetrakis(mercaptopropionate) ou encore le MDO [4-mercaptomethyl-3.6-dithia-1.8-octanedithiol]. Le polyisocyanate peut être notamment le xylylène diisocyanate.

Un substrat organique particulièrement approprié est obtenu par polymérisation de compositions à base de xylylène diisocyanate, de pentaerythritol tetrakis(mercaptoproprionate) et de MDO. Un tel produit est disponible chez Mitsui sous la dénomination MR8.

En tant que substrat minéral, on peut utiliser par exemple le matériau 1.6 de Corning, Code 60043, dont les constantes optiques sont sensiblement identiques à celles du MR8.

Un séparateur de polarisation idéal réfléchit la totalité de la lumière polarisée perpendiculairement au plan d'incidence (S) alors qu'il transmet la totalité de la lumière polarisée parallèlement au plan d'incidence (P). En réalité, dû aux effets des imperfections, de l'absorption etc., l'efficacité d'un séparateur est bien inférieure. L'efficacité d'un polariseur peut être exprimée comme le produit de la réflexion de la polarisation S (Rs) et de la transmission de la polarisation P (Tp), à savoir (Rs)x(Tp). On recherche alors un polariseur assurant une efficacité supérieure à 80%, et de préférence supérieure à 90%.

La limite inférieure du nombre de couches de l'empilement est donnée par la régularité souhaitée de la transmittance pour l'ensemble du spectre de la lumière. Dans la plupart des applications, ce spectre est celui de la lumière visible, c'est-à-dire des longueurs d'onde comprises entre 400 et 700nm. En effet, plus le séparateur comporte de couches et plus on améliore la sélectivité du polariseur à une longueur d'onde donnée ou bien, plus on élargit le spectre dans lequel s'opère la séparation de polarisation.

La limite supérieure du nombre de couches est donnée par le coût de leur dépôt. En outre, à partir d'un certain seuil, l'absorption peut réduire le rendement en lumière polarisée. Etant posé ces principes, un séparateur de polarisation efficace comprend de préférence un empilement comportant 5 à 20, en particulier 10 à 15 couches de matériaux de différents indices.

L'angle d'incidence optimal A du séparateur de polarisation est tel que :

$$\sin A = \frac{n_1 \cdot n_2}{n_3 \cdot \sqrt{n_1^2 + n_2^2}}$$

On constate à partir de cette relation que l'indice du substrat $n_3$ et l'angle d'incidence souhaité interviennent dans le choix des matériaux pour les couches minces de l'empilement.

Le séparateur de polarisation selon la présente invention est particulièrement adapté à des applications du type appareils de vision portables telles que les lentilles ophtalmiques présentant des inserts de projection d'une image vers l'utilisateur.

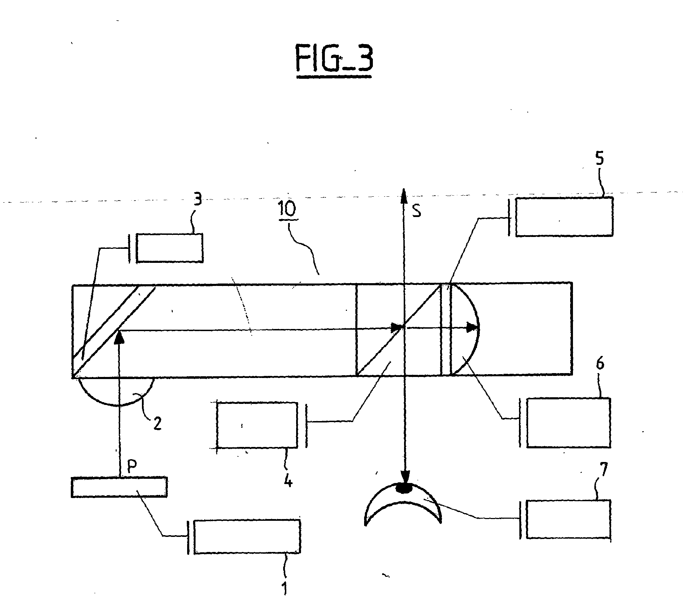

Un exemple d'une telle lentille est illustré à la figure 3. L'image est émise par une source 1. La source 1 peut être un afficheur miniaturisé tel qu'un microdisplay à cristaux liquides émettant une lumière polarisée. Le système optique de la lentille ophtalmique de projection 10 comprend une lentille de champ 2. Sur le trajet optique parcouru par l'image à l'intérieur de la lentille ophtalmique 10 est intercalé un miroir 3 et le séparateur de polarisation 4. Collé au séparateur de polarisation 4 est une lame quart d'onde 5 et un miroir de Mangin 6.

Le fonctionnement de la lentille ophtalmique 10 est le suivant. La lumière polarisée provenant de la source 1 passe tout d'abord par une lentille de champ 2. Après traversée de celle-ci, elle est réfléchie par un miroir 3 qui la renvoie à un angle de 90°. La lumière traverse ensuite le séparateur de polarisation 4, une des composantes de polarisation linéaire (S) étant réfléchie et l'autre (P) transmise. La composante transmise traverse une lame quart d'onde 5 dont les axes sont disposés à 45° de la direction de propagation, dans le plan perpendiculaire à la direction de propagation, puis frappe un miroir de Mangin 6, lequel réfléchit la lumière qui repasse à travers la lame quart d'onde. La lumière maintenant polarisée S est réfléchie par le séparateur de polarisation vers l'oeil de l'observateur.

Le mode de réalisation décrit à la figure 3 permet alors de renvoyer la lumière polarisée émise par l'afficheur vers l'oeil 7 avec un minium de pertes et donc un maximum d'intensité.

De préférence, la lentille ophtalmique est réalisée dans le même matériau que le substrat sur lequel a été déposé l'empilement de couches minces, donc par exemple un polythiouréthane tel que le MR8. Dans ce cas, le séparateur peut être constitué par un prisme. En effet, le fait d'utiliser pour le séparateur un substrat de même composition, donc de même indice de réfraction que le matériau constituant la lentille ophtalmique, permet de rendre le séparateur de polarisation moins visible pour le porteur, et de réduire ainsi la gêne occasionnée dans la fonction ophtalmique du verre.

Pour ce type d'applications, lorsque l'indice $n_3$ est sensiblement différent de l'indice de la lentille ophtalmique, le séparateur de polarisation est avantageusement réalisé sous forme de cube séparateur, composé de deux prismes, l'un d'entre eux portant sur une de ses faces un empilement tel que décrit ci-dessus. Il est également possible de concevoir le séparateur de polarisation sous la forme d'une lame immergée dans la lentille ophtalmique.

EXEMPLE 1

Un palet biplan de MR8 de 6,8 mm d'épaisseur et de diamètre de 65 à 70 mm est nettoyé dans un bain à ultrasons, puis soumis à un traitement thermique à 60°C dans l'étuve pendant 3 heures.

Le palet ainsi préparé est ensuite introduit dans une installation de dépôt sous vide. Il est alors soumis à un nettoyage ionique à l'argon à une pression de $3 \cdot 10^{-5}$ mbar sous 120 V de tension à l'anode et 1 A de courant d'ion pendant 2 minutes.

Puis on dépose une couche de $PrTiO_3$ d'une épaisseur indiquée dans le tableau 1, à une pression de $2,5 \cdot 10^{-5}$ mbar dans les conditions suivantes :

vitesse d'évaporation : 3nm/s ;
pression d'oxygène : $5 \cdot 10^{-5}$ mbar ;
source d'évaporation : canon à électrons.

L'épaisseur de la couche déposée est suivie au moyen d'une balance à quartz et l'évaporation est arrêtée lorsque l'épaisseur indiquée au tableau 1 est atteinte.

Ensuite, on procède au dépôt d'une couche de $SiO_2$ d'une épaisseur indiquée dans le tableau 1 dans les mêmes conditions.

On dépose ainsi alternativement douze couches au total. On découpe enfin le palet ainsi traité de façon à obtenir les séparateurs de polarisation ayant la forme désirée Les caractéristiques optiques d'un séparateur de polarisation ainsi obtenu sont indiquées à 1a figure 2 pour une incidence à 45°. La figure 1 montre la transmittance respective du séparateur de polarisation vis-à-vis de la lumière de polarisation perpendiculaire et parallèle. On constate que la transmittance est en moyenne d'environ 95% pour la lumière de polarisation P alors que la lumière de polarisation S est réfléchie à 90% en moyenne.

Tableau 1

| Couche | Matériau | Epaisseur [nm] |
|--------|----------|----------------|
| 1 | $SiO_2$ | 162,25 |
| 2 | $PrTiO_3$ | 104,44 |
| 3 | $SiO_2$ | 161,13 |
| 4 | $PrTiO_3$ | 87,49 |
| 5 | $SiO_2$ | 166,51 |
| 6 | $PrTiO_3$ | 87,22 |
| 7 | $SiO_2$ | 129,95 |
| 8 | $PrTiO_3$ | 69,43 |
| 9 | $SiO_2$ | 106,53 |
| 10 | $PrTiO_3$ | 54,35 |
| 11 | $SiO_2$ | 102,68 |
| 12 | $PrTiO_3$ | 65,77 |

EXEMPLE 2

On procède de la même façon qu'à l'exemple 1, sauf que pendant tout le cycle de traitement, le substrat est chauffé à une température de 80°C.

EXEMPLE 3 (exemple de comparaison)

On procède de la même façon qu'à l'exemple 1, mais en remplaçant le $PrTiO_3$ par du $ZrO_2$. Les épaisseurs respectives des couches sont indiquées dans le tableau 2.

Tableau 2

| Couche | Matériau | Epaisseur [nm] |
|--------|----------|----------------|
| 1 | $SiO_2$ | 154.74 |
| 2 | $ZrO_2$ | 108.36 |
| 3 | $SiO_2$ | 152.92 |
| 4 | $ZrO_2$ | 90.09 |
| 5 | $SiO_2$ | 166.17 |
| 6 | $ZrO_2$ | 85.98 |
| 7 | $SiO_2$ | 126.77 |
| 8 | $ZrO_2$ | 71.75 |
| 9 | $SiO_2$ | 106.81 |
| 10 | $ZrO_2$ | 55.87 |
| 11 | $SiO_2$ | 99.58 |
| 12 | $ZrO_2$ | 66.36 |

Test de résistance thermique

Les séparateurs de polarisation fabriqués selon les exemples 1 à 3 ont été soumis à un test pour évaluer leur résistance à la température.

Pour cela, le séparateur de polarisation est placé dans une étuve chauffée à une température de 60°C pendant une heure. Ensuite, l'aspect visuel des substrats est évalué. Lorsque le substrat ne présente aucune craquelure, on augmente la température de consigne de l'étuve de 10°C et on recommence le test. La température critique est alors définie comme étant celle où les substrats présentent des craquelures.

Les températures critiques ainsi déterminées sont portées dans le tableau 3.

Tableau 3

| Exemple | Température critique [°C] |
|---------|---------------------------|
| 1 | 110°C |
| 2 | 130°C |
| 3 | 90°C |

On constate que les séparateurs de polarisation obtenus selon l'invention, c'est-à-dire selon l'exemple 1 et 2, présentent une température critique supérieure, pouvant atteindre 110°, voire 130°C si l'on chauffe le substrat pendant le cycle de dépôt.

En dehors des applications décrites ci-dessus, le séparateur de polarisation peut être utile dans tous les domaines de fourniture et de traitement de la lumière polarisée. Par ailleurs, il est possible d'utiliser le séparateur de polarisation selon l'invention afin de séparer la lumière en ses composantes de polarisation circulaire ou elliptique.


**Revendications**

1. Séparateur de polarisation pour lentille ophtalmique comprenant un substrat pourvu d'un empilement alterné de couches de $PrTiO_3$ et d'un matériau à indice de réfraction inférieur, l'épaisseur de ces couches $e_1$ et $e_2$ satisfaisant respectivement les relations :

$$e_1 = \frac{\lambda\sqrt{n_1^{\ 2}+n_2^{\ 2}}}{4n_1^{\ 2}} \qquad\qquad e_2 = \frac{\lambda\sqrt{n_1^{\ 2}+n_2^{\ 2}}}{4n_2^{\ 2}}$$

dans lesquelles $\lambda$ est la longueur d'onde considérée, $n_1$ est l'indice de réfraction de la première couche et $n_2$ l'indice de réfraction de la deuxième couche respectivement.

2. Séparateur selon la revendication 1, dans lequel le substrat est organique.

3. Séparateur selon la revendication 2, dans lequel le substrat organique est un polythiouréthane.

4. Séparateur selon l'une des revendications 1 à 3, dans lequel le deuxième matériau est le dioxyde de silicium.

5. Séparateur selon l'une des revendications 1 à 4, comportant respectivement au moins 6 couches de titanate de praséodymium et du deuxième matériau.

6. Séparateur selon l'une des revendications 1 à 5, réalisé sous forme de cube formé de deux prismes dont un est revêtu de couches de $PrTiO_3$ et de matériau à bas indice selon les revendications 1 à 5.

7. Procédé de fabrication d'un séparateur de polarisation pour lentille ophtalmique comprenant les étapes suivantes :

   (i) fourniture d'un substrat ;
   (ii) dépôt d'une couche de titanate de praséodymium d'une épaisseur $e_1$ telle que définie à la revendication 1 ;
   (iii) dépôt d'une couche d'un deuxième matériau d'un indice de réfraction inférieur d'une épaisseur $e_2$ telle qu définie à la revendication 1 ; et
   (iv) répétition des étapes (ii) et (iii) au moins une fois.

**8.** Procédé selon la revendication 7, dans lequel l'étape iv) comprend au moins 5 répétitions des étapes ii) et iii).

**9.** Procédé selon la revendication 8, dans lequel dans lequel le substrat est maintenu pendant les étapes ii) à iv) à une température supérieure à l'ambiante.

**10.** Procédé selon l'une des revendications 7 à 9, dans lequel le substrat est maintenu pendant les étapes ii) à iv) à une température comprise entre 80 et 120°C.

**11.** Procédé selon l'une des revendications 7 à 10, dans lequel le substrat est soumis à un nettoyage ionique préalablement à l'étape ii).

**12.** Procédé selon la revendication 11, dans lequel le nettoyage ionique est réalisé à l'argon.

**13.** Procédé selon l'une des revendications 7 à 12, dans lequel la vitesse d'évaporation pendant l'étape ii) et iii) est de 1 à 10 nm/s ; de préférence 2 à 5 nm/s.

**14.** Lentille ophtalmique présentant des inserts de projection d'une image vers l'utilisateur comprenant un séparateur de polarisation selon l'une des revendications 1 à 6.

**15.** Lentille ophtalmique selon la revendication 14, dans lequel le séparateur de polarisation est réalisé sous forme de cube.

**16.** Dispositif de projection d'une image vers l'utilisateur comprenant une lentille selon la revendication 14 ou 15.

**17.** Dispositif de projection selon la revendication précédente comprenant en outre un micro-display à cristaux liquides.

**Claims**

**1.** A polarization splitter for an ophthalmic lens comprising a substrate provided with an alternating stack of layers of $PrTiO_3$ and a material having a lower refractive index, the thickness of these layers e1 and e2 respectively satisfying the relations:

$$e_1 = \frac{\lambda \sqrt{n_1^2 + n_2^2}}{4n_1^2} \qquad\qquad e_2 = \frac{\lambda \sqrt{n_1^2 + n_2^2}}{4n_2^2}$$

in which λ is the wavelength considered, n1 is the refractive index of the first layer and n2 is the refractive index of the second layer respectively.

**2.** The polarization splitter according to claim 1, in which the substrate is organic.

**3.** The polarization splitter according to claim 2, in which the organic substrate is a polythiourethane.

**4.** The splitter according to one of Claims 1-3, in which the second material is silicon dioxide.

**5.** The splitter according to one of Claims 1-4, carrying respectively at least six layers of praseodymium titanate and of second material.

**6.** The splitter according to one of Claims 1-5, in the form of a cube formed from two prisms one of which is coated with layers of $PrTiO_3$ and material of lower refractive index according to claims 1-5.

**7.** A method for producing a polarization splitter for an ophthalmic lens comprising:

(i) providing a substrate;

(ii) depositing a layer of praseodymium titanate of a thickness $e_1$ such as defined in claim 1;
(iii) depositing a layer of a second material of lower refractive index $e_2$ such as defined in claim 1; and
(iv) repeating steps (i) and (iii) at least once.

**8.** The method according to claim 7, in which step (iv)comprises at least five repetitions of steps (ii) and (iii).

**9.** The method according to claim 8, in which the substrate is maintained at a temperature greater than ambient temperature during steps (ii) to (iv).

**10.** The method according to one of claim 7-9, in which the substrate is maintained at a temperature comprised between 80 and 120° C during steps (ii) to (iv).

**11.** The method according to one of claim 7-10, in which the substrate is subject to ionic cleaning prior to step (ii).

**12.** The method according to claim 11, in which the ionic cleaning is performed under argon.

**13.** The method according to one of claim 7-12, in which the rate of evaporation during steps (ii) and (iii) is from 1 to 10 nm/s, preferably 2 to 5 nm/s.

**14.** An ophthalmic lens having inserts for projecting an image towards a user comprising a polarization splitter according to one of Claims 1-6.

**15.** The ophthalmic lens according to claim 14, in which the polarization splitter is in the form of a cube.

**16.** A device for projecting an image towards a user comprising a lens according to claim 14 or 15.

**17.** The projection device according to the preceding claim further comprising a liquid crystal micro-display.

**Patentansprüche**

**1.** Polarisationsteiler für eine opthalmische Linse, umfassend ein Substrat, das einen Stapel mit wechselnden Schichten aus $PrTiO_3$ und einem Material mit einem kleinerem Brechungsindex aufweist, wobei die Dicke der Schichten $e_1$ und $e_2$ jeweils folgenden Beziehungen gerecht wird:

$$e_1 = \frac{\lambda \sqrt{n_1^2 + n_2^2}}{4n_1^2} \qquad\qquad e_2 = \frac{\lambda \sqrt{n_1^2 + n_2^2}}{4n_2^2},$$

in welchen jeweils $\lambda$ die erachtete Wellenlänge, $n_1$ der Brechungsindex der ersten Schicht und $n_2$ der Brechungsindex der zweiten Schicht ist.

**2.** Teiler nach Anspruch 1, wobei das Substrat organisch ist.

**3.** Teiler nach Anspruch 2, wobei das organische Substrat ein Polyurethan ist.

**4.** Teiler nach einem der Ansprüche 1 bis 3, wobei das zweite Material Siliziumdioxid ist.

**5.** Teiler nach einem der Ansprüche 1 bis 4, umfassend jeweils mindestens sechs Schichten aus Praesodymtitanat bzw. Praesodymtitanoxid und des zweiten Materials.

**6.** Teiler nach einem der Ansprüche 1 bis 5, ausgeführt mittels zweier in Würfelform angeordneter Prismen, wobei eines der Prismen mit $PrTiO_3$ und dem Material mit niedrigem Index nach den Ansprüchen 1 bis 5 beschichtet ist.

**7.** Verfahren zur Herstellung eines Polarisationsteilers für eine opthalmische Linse, umfassend folgende Schritte:

(i) Bereitstellung eines Substrates;
(ii) Aufbringen einer Praesodymtitanoxidschicht der Dicke $e_1$, wie in Anspruch 1 definiert;
(iii) Aufbringen einer Schicht eines zweiten Materials mit einem niedrigerem Brechungsindex mit einer Dicke $e_2$, wie in Anspruch 1 definiert; und
(iv) mindestens einmalige Wiederholung der Schritte (ii) und (iii).

8.  Verfahren nach Anspruch 7, wobei der Schritt (iv) mindestens fünf Wiederholungen der Schritte (ii) und (iii) umfasst.

9.  Verfahren nach Anspruch 8, wobei das Substrat während der Schritte (ii) bis (iv) auf einer Temperatur größer als der Umgebungstemperatur gehalten wird.

10. Verfahren nach einem der Ansprüche 7 bis 9, wobei das Substrat während der Schritte (ii) bis (iv) auf einer Temperatur zwischen 80 und 120 °C gehalten wird.

11. Verfahren nach einem der Ansprüche 7 bis 10, wobei das Substrat einer dem Schritt (ii) vorausgehenden ionischen Reinigung unterzogen wird.

12. Verfahren nach Anspruch 11, bei dem die ionische Reinigung mit Argon erfolgt.

13. Verfahren nach einem der Ansprüche 7 bis 12, wobei die Bedampfungsgeschwindigkeit während Schritt (ii) und (iii) zwischen 1 und 10 nm/s beträgt; vorzugsweise zwischen 2 und 5 nm/s.

14. Ophthalmische Linse, welche Einsätze zur Projektion eines Bildes zum Anwender aufweist, umfassend einen Polarisationsteiler nach einem der Ansprüche 1 bis 6.

15. Ophthalmische Linse nach Anspruch 14, wobei der Polarisationsteiler in Form eines Würfels ausgeführt ist.

16. Mittel zur Projektion eines Bildes zum Anwender, welches eine Linse entsprechend den Ansprüchen 14 oder 15 umfasst.

17. Projektionsmittel gemäß dem vorangehendem Anspruch, welches außerdem einen Flüssigkristall-Mikro-Bildschirm umfasst.

## FIG_1

## FIG_2

Transmittance(%)

Longueur d'onde(nm)

## FIG_3